# EUROPEAN PATENT APPLICATION

(11) **EP 4 850 888 A1**
(43) Date of publication of application: **09.12.2026**
(21) Application number: 26182462.7
(22) Date of filing: 02.06.2026
(51) Int. Cl.: B29C 49/78, B29C 49/02, B29C 49/06, B29C 49/12, B29C 49/36, B29C 49/42, B29C 49/46, B29C 49/48, B29C 49/58, B29C 49/64, B29L 31/00

(54) **PLASTIC CONTAINER MANUFACTURING APPARATUS**

(30) Priority: 06.06.2025 JP 2025094856
(71) Applicant: Shibuya Corporation, Kanazawa-shi, Ishikawa 920-8681 (JP); Frontier, Inc., Ueda-shi, Nagano 386-1322 (JP)
(72) Inventor: Nishino, Yukinobu, Kanazawa-shi, Ishikawa, 920-8681 (JP); Shimizu, Yutaka, Kanazawa-shi, Ishikawa, 920-8681 (JP); Eda, Masaaki, Kanazawa-shi, Ishikawa, 920-8681 (JP); Hayashi, Masanori, Kanazawa-shi, Ishikawa, 920-8681 (JP); Aotsuka, Hisakazu, Kanazawa-shi, Ishikawa, 920-8681 (JP); Toi, Katsuyoshi, Kanazawa-shi, Ishikawa, 920-8681 (JP); Washi, Naoya, Kanazawa-shi, Ishikawa, 920-8681 (JP); Sakai, Kiyoshi, Kanazawa-shi, Ishikawa, 920-8681 (JP); Netsu, Yoichi, Nagano, 386-1322 (JP); Ito, Takuya, Nagano, 386-1322 (JP); Nakamura, Takeshi, Nagano, 386-1322 (JP)
(74) Representative: Hoffmann Eitle

(57) **Abstract**

A plastic container manufacturing apparatus (10, 28) includes a blow molding device in which a stretch rod (28, 30) is moved upward and downward within a preform held in a mold by using a linear motor (30), and compressed air is injected from an air supply source (34) through a solenoid valve unit (36). The apparatus (10, 28) includes a motor control unit (32A) for controlling the linear motor (30) and a solenoid-valve command unit for commanding injection of compressed air by opening and closing the solenoid valve unit (36). A reference-pulse generator generates reference pulse signals at predetermined intervals and sends the reference pulse signals to the motor control unit (32A) and the solenoid-valve command unit. The motor control unit (32A) controls a position of the stretch rod (28, 30) based on the reference pulse signals. The solenoid-valve command unit opens the solenoid valve unit (36) to inject compressed air into the preform when the reference pulse signals reach a preset pulse count stored in advance.

## Description

### BACKGROUND OF THE INVENTION

### 1. Field of the Invention

The present invention relates to an apparatus for manufacturing a plastic container from a preform by blow molding.

### 2. Description of the Related Art

In an apparatus for blow-molding a plastic container from a preform, a heated preform is placed in a mold, and blow air is injected into the preform while the preform is stretched by a stretch rod inserted into the preform, thereby expanding the preform in the axial direction and the radial direction and pressing the preform against the mold for molding (see Patent Document 1). In such an apparatus, it is necessary to control the movement of the stretch rod and the supply of blow air at appropriate timing. In the apparatus disclosed in Patent Document 1, the actual position (height) of the inserted stretch rod is detected, and the supply state of the blow air is controlled based on the actual position and a blow-air start height set by an operator.

[Patent Document 1] Japanese Patent No. 7448525

However, since the command to start the blow air is issued via a solenoid valve, the solenoid valve is actuated and the injection of the blow air is started only after a control unit determines that the stretch rod has reached a preset start height, based on the detected height of the stretch rod. With this configuration, a time lag occurs between the stretch rod reaching the start height and the solenoid valve actuating in response to the command. This causes a control delay and fails to maintain appropriate timing. In a high-speed mass-production machine, such a control delay leads to lower productivity per mold and reduced competitiveness.

An object of the present invention is to provide an apparatus for manufacturing a plastic container capable of accurately controlling the movement of a stretch rod and the timing of blow-air injection.

### SUMMARY OF THE INVENTION

A plastic container manufacturing apparatus is configured to manufacture a plastic container by stretching a preform held in a mold by injecting a pressurized fluid into the preform. The apparatus includes a stretch rod arranged in the mold and movable in a vertical direction, an elevating mechanism that moves the stretch rod in the vertical direction, and a pressurized-fluid supply unit that injects the pressurized fluid into the preform held in the mold. The apparatus further includes an elevating-mechanism control unit that controls a vertical position of the stretch rod via the elevating mechanism, and a fluid-injection command unit that outputs a command for starting injection of the pressurized fluid via the pressurized-fluid supply unit. A reference-signal generator generates a reference signal representing an elapsed time, and the reference signal is supplied to both the elevating-mechanism control unit and the fluid-injection command unit. The elevating-mechanism control unit controls the vertical position of the stretch rod based on the reference signal, and the fluid-injection command unit detects, based on the reference signal, that a prestored pressurized-fluid injection start timing has been reached, and outputs the command for starting injection of the pressurized fluid.

According to a second aspect of the present invention, the pressurized fluid is air.

According to a third aspect of the present invention, the pressurized fluid is a liquid.

According to the present invention, it is possible to provide a plastic container manufacturing apparatus capable of accurately controlling movement of a stretch rod and timing of blow-air injection.

### BRIEF DESCRIPTION OF THE DRAWINGS

Fig. 1 is a plan view showing an arrangement of a plastic container manufacturing apparatus according to one embodiment of the present invention.
Fig. 2 is a block diagram showing an electrical configuration of a stretch rod for performing blow molding.
Fig. 3 is a cross-sectional view showing a blow molding process using a mold, in time sequence.
Fig. 4 is a graph showing a position (height) of a stretch rod with respect to a reference pulse count (time) during a blow molding operation, and timing of start of supply of compressed air.

### DESCRIPTION OF THE PREFERRED EMBODIMENTS

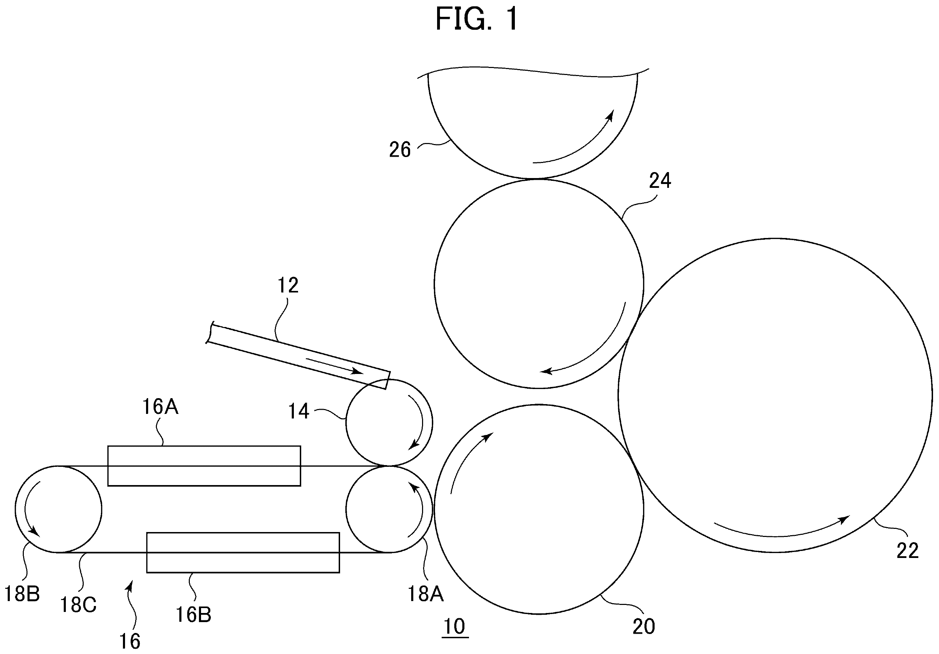

The present invention is described below with references to an embodiment shown in the drawings. Fig. 1 is a plan view showing the layout of a plastic container manufacturing apparatus according to an embodiment of the present invention.

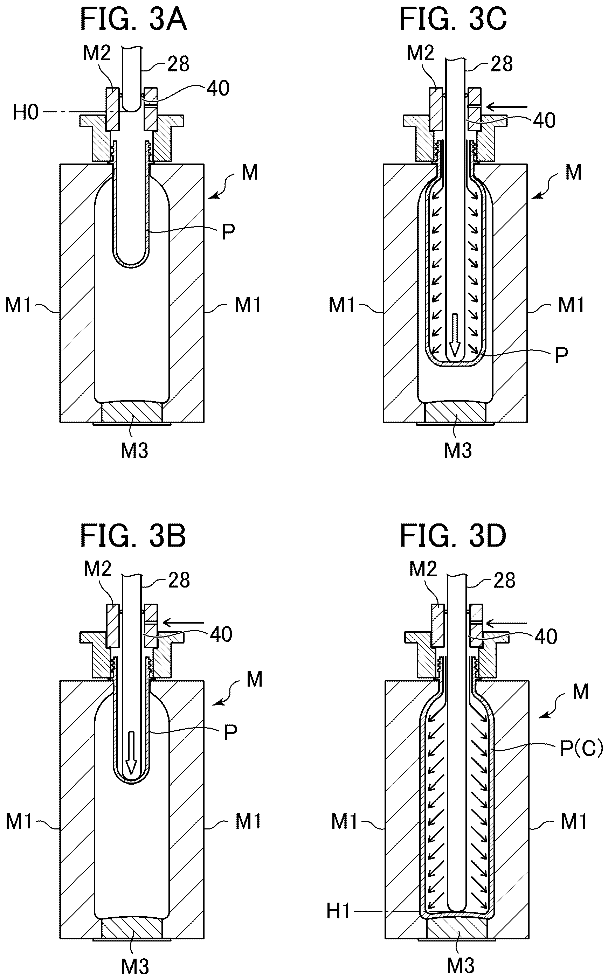

In the plastic container manufacturing apparatus 10 of the present embodiment, a preform P at room temperature (see Fig. 3(a)) is supplied via a chute 12, and the preform P on the chute 12 is transferred to a heating device 16 via a transfer wheel 14. The heating device 16 is, for example, a chain conveyor entrained around sprockets 18A and 18B rotated about a vertical axis, and an endless chain 18C is provided with grippers (not shown) for holding the preforms P at predetermined intervals.

A primary heating section 16A is provided in a span of the heating device 16 adjacent to the transfer wheel 14, and a secondary heating section 16B is provided in the other span. The preform P is heated in the primary heating section 16A to 70°C (e.g.), and is then heated in the secondary heating section 16B to 100°C (e.g.). As a result, the preform P is heated to a temperature required for blow molding.

The preform P heated in the heating device 16 is transferred to a blow molding wheel 22 via a supply wheel 20. At the blow molding wheel 22, as will be described later, blow molding is performed on the preform P, whereby the preform P is formed into a container C (see Fig. 3). The container C formed at the blow molding wheel 22 is discharged to a downstream processing device via a discharge wheel 24 and a transfer wheel 26.

Grippers (not shown) for holding the preforms P and the formed containers C are provided at predetermined intervals on outer peripheral portions of the supply wheel 20, the discharge wheel 24, and the transfer wheel 26.

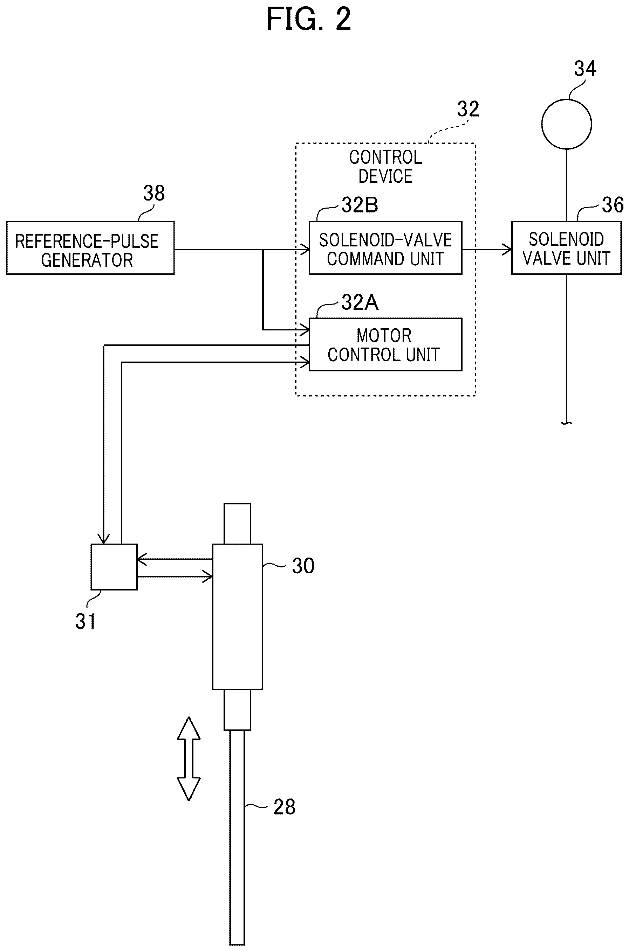

Next, the configuration of the blow molding wheel 22 of the present embodiment will be described with reference to Figs. 2 and 3. Fig. 2 is a block diagram showing an electrical configuration of a stretch rod 28 used for blow molding. Fig. 3 is a cross-sectional view showing a blow molding process using a mold, in time sequence.

The blow molding wheel 22 is similar to a conventional blow molding machine, except for the stretch rod movement control and the solenoid valve unit control for compressed air supply. The preforms P held by grippers are each received and held in a mold M having a shape corresponding to a container C. The mold M includes a pair of openable side molds M1, a blow core M2 that covers an upper end portion of the preform P, and a bottom mold M3. The molds M1, M2 and M3 are arranged to surround the preform P by means of a conventionally known drive mechanism (not shown), as shown in Fig. 3.

Above each mold M, a stretch rod 28 is vertically disposed and is inserted from above into the preform P. An upper end of each stretch rod 28 is held by a drive mechanism such as a linear motor (elevating mechanism) 30 and is movable upward and downward. The linear motor 30 is connected to a motor control unit 32A (elevating-mechanism control unit) of a control device 32 via a linear motor amplifier 31. Based on commands from the motor control unit 32A, the linear motor 30 moves the stretch rod 28 vertically to control its position (height) .

The control device 32 is further provided with a solenoid-valve command unit (fluid-injection command unit) 32B. The solenoid-valve command unit 32B controls opening and closing of a solenoid valve unit (pressurized-fluid supply unit) 36 that supplies compressed air (pressurized fluid) from an air supply source (pressurized-fluid supply unit) 34 to the preform P in the mold M. Reference signals for detecting elapsed time, such as reference pulse signals at predetermined intervals, are input from a reference-pulse generator (reference-signal generator) 38 to both the motor control unit 32A and the solenoid-valve command unit 32B.

A gap 40 is formed between the blow core M2 and the stretch rod 28. Compressed air from the air supply source 34 via the solenoid valve unit 36 is delivered into the preform P through the gap 40.

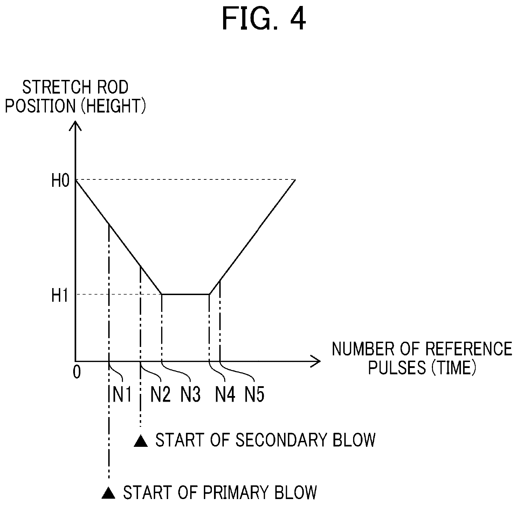

Next, a blow molding operation performed by the blow molding wheel 22 of the present embodiment will be described with reference to Figs. 2, 3, and 4. Fig. 4 is a graph showing the change in the position (height) of the stretch rod 28 over time, represented by the number of reference pulses generated by the reference-pulse generator 38 and sent to the motor control unit 32A and the solenoid-valve command unit 32B during the blow molding operation. The graph also indicates the timings at which compressed air is supplied for the primary blow step, the secondary blow step, and the exhaust step.

In the motor control unit 32A, positions (heights) of the stretch rod 28 are preset with respect to the number of reference pulses. The motor control unit 32A controls the linear motor 30 according to the above-mentioned position-pulse relationship, thereby controlling the movement (position) of the stretch rod 28. The preset relationship between the number of reference pulses and the positions (heights) of the stretch rod 28 may be stored as a pulse-to-position table, or may alternatively be defined using a formula or the like. The solenoid-valve command unit 32B is configured to control the opening and closing of the solenoid valve unit 36 in accordance with a preset relationship between the number of reference pulses and an operation amount of the solenoid valve unit 36.

As shown in Fig. 4, when the blow molding operation is initiated, reference pulse counting is started in the motor control unit 32A and the solenoid-valve command unit 32B. At substantially the same time, the motor control unit 32A controls the linear motor 30 to lower the stretch rod 28 from a standby position (height) H0 (see Fig. 3(a)). As a result, the stretch rod 28 is inserted into the preform P through the blow core M2 at a predetermined speed. During this phase, compressed air is not supplied to the preform P by the solenoid valve unit 36.

When the number of reference pulses reaches a predetermined value N1, the solenoid-valve command unit 32B determines that the stretch rod 28 has reached a position immediately after its lower end comes into contact with or adjacent to a bottom portion of the preform P (see Fig. 3 (b)). The solenoid-valve command unit 32B then actuates the solenoid valve unit 36 to supply compressed air to the preform P in the mold M, thereby starting a primary blow step. When the number of reference pulses reaches a predetermined value N2 (N1 < N2 < N4), the solenoid-valve command unit 32B actuates the solenoid valve unit 36 to start a secondary blow step (see Fig. 3(c)). When the number of reference pulses further reaches a predetermined value N5 (≥ N4), the solenoid valve unit 36 terminates the secondary blow step and starts an exhaust step.

Meanwhile, when the number of reference pulses reaches a predetermined value N3 (N1 < N3 < N4), the motor control unit 32A determines that the stretch rod 28 has reached a target position (height) H1 and stops the linear motor 30 to stop further downward movement of the stretch rod 28. At this stage, a bottom surface of the preform P is brought adjacent to the bottom mold M3 (see Fig. 3(d)). When the number of reference pulses subsequently reaches a predetermined value N4 (N4 > N3), the linear motor 30 is driven to start upward movement of the stretch rod 28. As a result, the stretch rod 28 is returned to the original standby position (height) H0 at a predetermined speed.

As described above, according to the plastic container manufacturing apparatus of the present embodiment, the motor control unit, which controls movement of the stretch rod, and the solenoid-valve command unit, which controls a solenoid valve for supplying and exhausting compressed air, are controlled based on the same reference signal. Accordingly, the timing of movement of the stretch rod and injection of blow air can be accurately controlled without delay.

Although the present embodiment employs a cold parison (2-step) molding in which the preform is reheated, the apparatus is also applicable to a hot parison (1-step) molding. Further, although a linear motor is used to drive the stretch rod in the present embodiment, a servo motor may be used instead. In the present embodiment, supply (injection) of compressed air is controlled by a solenoid valve. Alternatively, any other known valve mechanism, such as an electric valve or a hydraulic/pneumatic valve, may be used as long as a stable rise time can be ensured. In such a case, a number of pulses corresponding to the rise time may be preset as a timing parameter. As an alternative, blow molding may be carried out using a pressurized liquid instead of compressed air.

Although the embodiments of the present invention have been described herein with reference to the accompanying drawings, obviously many modifications and changes may be made by those skilled in this art without departing from the scope of the invention.

### DESCRIPTION OF REFERENCE SIGNS

10: Plastic container manufacturing apparatus
28: Stretch rod
30: Linear motor (elevating mechanism)
32A: Motor control unit (elevating-mechanism control unit)
32B: Solenoid-valve command unit (fluid-injection command unit)
34: Air supply source (pressurized-fluid supply unit)
36: Solenoid valve unit (pressurized-fluid supply unit)
38: Reference-pulse generator (reference-signal generator)
C: Container
M: Mold (forming mold)
P: Preform

## Claims

1. A plastic container manufacturing apparatus (10) configured to manufacture a plastic container (C) by stretching a preform (P) held in a mold (M) by injecting a pressurized fluid into the preform (P) to thereby stretch the preform (P), the apparatus (10) comprising:
a stretch rod (28) arranged in the mold (M) and movable in a vertical direction;
an elevating mechanism (30) configured to move the stretch rod (28) in the vertical direction;
a pressurized-fluid supply unit (34, 36) configured to inject the pressurized fluid into the preform (P) held in the mold (M);
an elevating-mechanism control unit (32A) configured to control a vertical position of the stretch rod (28) via the elevating mechanism (30);
a fluid-injection command unit (32B) configured to output a command for starting injection of the pressurized fluid via the pressurized-fluid supply unit (34, 36); and
a reference-signal generator (38) configured to generate a reference signal representing an elapsed time;
wherein the reference signal is supplied to the elevating-mechanism control unit (32A) and to the fluid-injection command unit (32B), the elevating-mechanism control unit (32A) controls the vertical position of the stretch rod (28) based on the reference signal, and the fluid-injection command unit (32B) detects, based on the reference signal, that a prestored pressurized-fluid injection start timing has been reached, and outputs the command for starting injection of the pressurized fluid.

2. The plastic container manufacturing apparatus (10) according to claim 1, wherein the pressurized fluid is air.

3. The plastic container manufacturing apparatus (10) according to claim 1, wherein the pressurized fluid is a liquid.
